# EUROPEAN PATENT SPECIFICATION

(11) **EP 4 281 213 B1**
(45) Date of publication and mention of the grant of the patent: **10.12.2025**
(21) Application number: 22701925.4
(22) Date of filing: 19.01.2022
(51) Int. Cl.: B01J 4/00, B01J 8/00

(54) **HOPPER COMPRISING COOLING ELEMENTS**
TRICHTER MIT KÜHLELEMENTEN
TRÉMIE COMPRENANT DES ÉLÉMENTS DE REFROIDISSEMENT

(30) Priority: 21.01.2021 EP 21152809
(43) Date of publication of application: 29.11.2023
(73) Proprietor: Yara International ASA, 0277 Oslo (NO)
(72) Inventor: VIDTS, Pieter, 9050 Gentbrugge (BE); SMIT, Pascal, 4533 DE Terneuzen (NL)
(74) Representative: AWA Sweden AB
(86) International application number: PCT/EP2022/051061
(87) International publication number: WO 2022/157164

(56) References cited:
- EP-A1- 0 444 338
- JP-A- H07 266 313
- US-A- 3 231 413
- US-A1- 2020 017 416

## Description

### Field of the invention

The present disclosure is related to the field of chemical manufacturing, in particular the present disclosure provides a novel hopper comprising cooling elements.

### Background of the invention

A hopper, also named a collection container for particles, is a device that can collect a material, in particular a granular or particulate material, hold it and dispense it on demand. A hopper is a container with a large opening on its top to easily receive the material to hold and a narrow bottom end to dispense the material in a controlled manner. Hoppers may alternatively be described as containers with converging sides, i.e. having sort of a funnel shape. Hoppers are widely used in the manufacturing of chemicals, such as fertilizer particles.

EP0444338A1 (Cominco Ltd, 1991) discloses a device for cooling solid particles. The device comprises a plurality of parallel, spaced, vertical heat exchanger plates, a feed hopper, and a discharge hopper. The heat exchanger plates are connected to a fluid inlet and outlet located on a side of the hopper. The device reduces the attrition and abrasion of the particles it cools.

US20200017416A1 (thyssenkrupp AG, 2020) discloses a system comprising a fluidized bed granulator, a cooler and a product screen. The product screen comprises an exit for oversized particles which is connected to the fluidized bed granulator via one or more crushers.

The functions of hoppers available today are limited to its primary functions, i.e. collecting, storing and dispensing a material. There is a need to develop novel hoppers that may cool down the material that hoppers hold.

### Summary of the invention

It was found that it was possible to develop a novel type of hoppers that comprise cooling elements in its buffer compartment, so that the temperature of the particles collected, and dispensed by the hopper would decrease during their stay in the hopper. The buffer compartment is the section of a hopper where materials, such as particles, are provided or held before use or distribution.

The present inventors also found a method to revamp a conventional hopper, i.e. a hopper not comprising any cooling function. It is particularly interesting to revamp an existing device, since this allows to solve a problem by modifying only one device, the hopper, and does not require changes on other devices, such as the devices connected to the hopper. Also a revamped hopper does not use more space in the plant than the original hopper.

Revamping a device allows the plant to improve its capacity or capabilities with minimal cost and minimal interruption to the plant.

The present invention is defined by the appended set of claims.

In a first aspect, the present disclosure is related to a hopper comprising a buffer compartment defined by side walls, a top end comprising an opening adapted for receiving solid particles, and a bottom end comprising an opening adapted for dispensing the solid particles from the buffer compartment. The buffer compartment comprises a plurality of essentially vertically positioned cooling plate-like elements for cooling the solid particles in the buffer compartment.

In another aspect, the present disclosure is related to a method for operating the hopper according to the present disclosure comprising the steps of: a) activating the cooling effect of the plurality of the cooling plate-like elements; b) providing solid particles, e.g. as a feed or a stream, to the top end of the hopper e.g. in a continuous or intermittent manner; and c) dispensing cooled solid particles via the opening of the bottom end of the hopper e.g. in a continuous or intermittent manner.

In another aspect, the present disclosure is related to a method for operating a system according to the present disclosure, comprising the steps of:
I) activating the cooling effect of the plurality of the cooling plate-like elements of said hopper;
II) directing a melt to a granulator, in particular a melt comprising one or more selected from the group of urea, ammonium salt, nitrate salt, and/or mixtures thereof;
III) granulating the melt in the granulator thereby obtaining particles, in particular in a fluidized bed granulator;
IV) separating the obtained particles based on predetermined size ranges into fractions of on-specs solid particles, undersized solid particles and oversized solid particles; and
V) directing any oversized solid particles obtained to said hopper;
VI) providing said any oversized solid particles to the top end of said hopper, e.g. in a continuous or intermittent manner; and
VII) dispensing cooled solid particles via the opening of the bottom end of said hopper, e.g. in a continuous or intermittent manner,
VIII) dispensing the cooled solid particles from the hopper to a crusher to reduce the particle size of the solid particles, and
IX) separating and directing any undersized solid particles obtained from the crusher to the granulator.

In another aspect, the present disclosure is related to a method for production of solid particles, using the present hopper, comprising the steps of:
a) activating the cooling effect of the plurality of the cooling plate-like elements of said hopper;
b) providing solid particles to the top end of said hopper e.g. in a continuous or intermittent manner; and
c) dispensing cooled solid particles via the opening of the bottom end of said hopper e.g. in a continuous or intermittent manner,
d) dispensing the cooled solid particles from the hopper to a crusher to reduce the particle size of the solid particles, and
e) separating and directing any undersized solid particles obtained from the crusher to the granulator,
wherein said solid particles provided in b) are obtained by the steps of:
i) directing a melt to a granulator, in particular a melt comprising one or more selected from the group of urea, ammonium salt, nitrate salt, and/or mixtures thereof;
ii) granulating the melt in the granulator thereby obtaining particles, in particular in a fluidized bed granulator,
iii) separating the obtained particles based on predetermined size ranges into fractions of on-specs solid particles, undersized solid particles and oversized solid particles; and
iv) directing any oversized solid particles obtained to said hopper as said solid particles of step b.

In another aspect, the present disclosure is related to a method for producing solid particles in a granulator, in particular a fluidized bed granulator, using the hopper according to the present disclosure, comprising the steps of: a) directing a melt to a granulator, in particular a melt comprising one or more selected from the group of urea, ammonium salt, nitrate salt, and/or mixtures thereof; b) granulating the melt in the granulator thereby obtaining on-specs solid particles, undersized solid particles and oversized solid particles; c) activating the cooling effect of the plurality of the cooling-plate-like elements of the hopper according to the present disclosure; d) directing the oversized solid particles to the hopper according to the present disclosure; e) dispensing the cooled oversized solid particles from the hopper according to the present disclosure to a crusher, thereby obtaining undersized solid particles, and optionally also on-size solid particles; and f) directing the undersized solid particles obtained from the crusher in step e) to the granulator.

In another aspect, the present disclosure is related to the use of the hopper according to the present disclosure for dispensing solid particles to a crusher.

In another aspect, the present disclosure is related to the use of the hopper according to the present disclosure in the manufacturing of solid fertilizer particles, such as sized solid fertilizer particles.

### Brief description of the figures

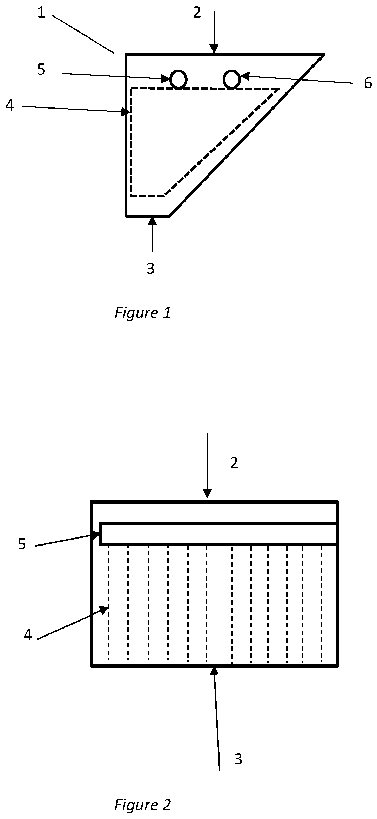

The following description of the figure 1 of a specific embodiment of a hopper according to the present disclosure is only given by way of example and is not intended to limit the present explanation, its application or use.

Figure 2 is showing another view of the same embodiment as Figure 1, after a rotation of 90 ° around a vertical axis. In the figures, identical reference numerals refer to the same or similar parts and features.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a device" refers to one or more than one compartment.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure is related to a hopper comprising a buffer compartment defined by side walls, a top end comprising an opening for receiving solid particles, and a bottom end comprising an opening for dispensing the solid particles from the buffer compartment. The buffer compartment comprises a plurality of essentially vertically positioned cooling plate-like elements for cooling the solid particles in the buffer compartment.

A hopper is a very convenient apparatus to regulate the flow of solid particles between two other apparatus in a production process. For example, it can be used to transfer solid particles or granules from a conveyor belt to a crusher. It may dispense solid particles at a constant rate in a precise area. A hopper comprises a buffer compartment. The buffer compartment may be defined by the interior of the hopper. The buffer compartment may be provided by the interior volume of the hopper. The buffer compartment may be defined by side walls, top end, and bottom end of the hopper, in which solid particles can be held, e.g. before being distributed. The height of the hopper and the buffer compartment may be the same. The top end of the hopper is at least partially open to allow receive the solid particles. Alternatively, the top end of the hopper may comprise a lid that may be opened during operations, to allow provision of the solid particles to the hopper and its buffer compartment. Solid particles may be provided to the hopper or its buffer compartment in a continuous or intermittent manner. Thus, the top end is adapted to receive solid particles in a continuous or intermittent manner. The solid particles may be provided to the hopper via a conveyor belt, a heat exchanger, a pipe or any other suitable apparatus. A product chute or funnel may be installed above the opening of the top end of the hopper to guide the solid particles into the hopper. The bottom end, or bottom section, of the hopper is where the particles are dispensed, e.g. to another apparatus of the production process. The solid particles may be allowed to exit the hopper or its buffer compartment in a continuous or intermittent manner. Thus, the bottom end or section is adapted to allow exit of solid particles in a continuous or intermittent manner. The bottom end may be partly or completely opened when dispensing the solid particles, such as granules. The bottom end may comprise a movable device such as a lid that may be closed to prevent any particles from leaving the hopper, or to be partly opened, or to be completely opened.
The feed of solid particles into the hopper or its buffer compartment, and the exit of said solid particles from the hopper or its buffer compartment which may be adapted to be performed in continuous or intermittent manners, are e.g. performed in the same manner, i.e. if feeding is performed continuously so is also the exit, likewise if feeding is performed intermittently so is also the exit. The hopper or its buffer compartment may always contain solid particles during operation thereof.

The opening of the bottom end of the hopper or buffer compartment is often smaller, i.e. has a smaller area, than the opening of the top end of the hopper or buffer compartment to dispense the particles in a more precise manner. The opening of the top end should be large enough to receive all the solid particles that the hopper or buffer compartment is adapted for to receive. The size and shape of the opening may be adapted to any process or any equipment that provides the solid particles to the hopper. The geometry and size of the bottom end may be adapted, depending on the purpose of the hopper or any apparatus that it dispenses the solid particles to.

During operations, the hopper and its buffer compartment is receiving and/or containing solid particles, and may be kept at least partially full, meaning that there are always solid particles in the buffer compartment of the hopper. This ensures that the dispensing flow of the hopper is always constant. While the solid particles are in the hopper, they may exchange heat with the ambient atmosphere. However, the solid particles may be tightly packed, and the heat exchange with the ambient atmosphere is therefore limited.

The present inventors were faced with the problem that the temperature of the particles as received by a hopper was too high to dispense them to a subsequent apparatus. This was especially observed in view of the heat provided during production of solid particles via granulation processes, which were subsequently forwarded to a hopper. For example, if the particles are to be dispensed from a hopper to a crusher, it is important that the solid particles do not exceed a temperature above which the solid particles do not crush well. Indeed, if solid particles are above a certain temperature in a crusher, they will tend to cake upon crushing and form a kind of paste instead of crushing into smaller free-flowing solid particles. Furthermore, it was observed that some particles provided to the hopper still contained a liquid phase inside. This is possible since particles may be produced from a hot melt, in particular in granulators, such as fluidized bed granulator, drum granulator or pan granulator. Such liquid would then spill into the crusher when the particles are crushed, and solidify inside the crusher, eventually blocking the crusher after accumulation.

In order to solve this problem, it was envisioned and then determined to add cooling plate-like elements, which may be essentially vertically positioned, into and therefore contained in the buffer compartment of the hopper. Once the particles are provided into the hopper, some of them come into contact with the cooling plate-like elements and their temperature is reduced. Due to particles movement within the buffer compartment, the cooled particles may come into contact with other warmer particles and reduce their temperature as well. It may not be necessary that all the solid particles present in the hopper come into contact with the cooling elements to achieve a reduction in the overall temperature of the stream of solid particles being dispensed.

It could be envisioned to cool the walls of the hopper to cool the particles inside it, but placing the cooling elements in the buffer compartment allows a faster cooling since the surface of contact of the solid particles with the cooled parts is much greater with the present solution.

Adding the cooling elements in the hopper allows the cooling of solid particles without any change or major impact to the devices connected to the hopper, e.g. allowing for minimized interference and change to common or original equipment setups.

The cooling plate-like elements may have any kind of geometry. Commercial products often have a square or rectangle geometry. The geometry of the elements may be adapted to the geometry of the buffer compartment of the hopper. The cooling plate-like elements must fit into the buffer compartment of the hopper. The elements may have a geometry similar to the geometry of the buffer compartment, i.e. if the buffer compartment has a trapezoidal cross-section, such as the device on figure 1, the cooling plate-like elements may also have a trapezoidal cross-section. This ensures that the cooling elements may have a surface area as high as allowed by the geometry of the buffer compartment, therefore a cooling effect as high as possible.

In one embodiment, the cooling plate-like elements have a trapezoidal geometry.

The cooling elements may be pillow plates, i.e. plates made of two thin sheets of material, for example steel, joined to each other, for example by weld, in discrete location. A pillow plate comprises a space, or channel, between the two sheets where a cooling liquid can be present and flow.

The cooling elements are positioned in the hopper, i.e. in the buffer compartment. The cooling elements may be positioned in a direction extending at least partially along the distance between the top end, and bottom end of the hopper or its buffer compartment. As a hopper often is installed in a process to use the force of gravity onto any material contained therein, a hopper is often provided in a vertical manner, i.e. the top end being positioned vertically above the bottom end, although different embodiments may be envisioned. Similarly, the cooling elements may be positioned essentially vertically, meaning that a preferred position of the cooling elements is vertically oriented in the buffer compartment in view of the top and bottom ends thereof. This ensures that the flow of particles is not hindered by the elements, and reduces the risk of the particles sticking to the elements or the risk of damage to the particles. But the cooling elements may also be positioned at an angle compared to the vertical position. It may not be necessary to achieve a perfect vertical alignment of the cooling elements. The cooling elements may be positioned such that they deviate from the vertical with an angle of at most 20°, i.e. an angle between 0 and 20°, in particular at most 10°, i.e. between 0 and 10°, more in particular between 0 and 5°.

The plurality of cooling elements may be positioned along the side walls of the buffer compartment and/or within the buffer compartment at a distance from the side walls, e.g. in such a manner as the plurality of cooling elements are extending inwards towards the center of the buffer compartment. The cooling elements may be attached directly to the walls of the hopper. Some cooling elements may be attached to one-another to provide structural rigidity to the assembly of cooling elements.

In one embodiment, the height of the cooling plate-like elements is comprised between 30 and 80% of the height of the hopper. The size of the cooling plate-like elements may correspond to between 30 and 80% of the height of the hopper. The cooling plate-like elements may be extending, in a vertical direction from the bottom end of the hopper, between 30 and 80% of the height of the hopper. The cooling plate-like elements should be located within the buffer compartment of the hopper. The height of the cooling elements determines the contact time between the solid particles and the cooling elements: the taller the cooling elements, the higher the contact time. The height of the cooling elements may be determined based on the temperature of the solid particles intended for the hopper when such solid particles arrive to the hopper, and the desired temperature of the solid particles at the bottom end of the hopper. It was found that the cooling elements may have a height comprised between 30 and 80% of the height of the hopper. It was found that it may be preferable that the height of the cooling elements should be less than 80% of the height of the hopper, so that the cooling elements do not extend near the top end of the hopper.

In one embodiment, the height of the cooling plate-like elements is comprised between 30 and 70%, such as 30 to 65%, 35 to 70%, 40 to 70%, 35 to 65%, 40 to 65%, 40 to 60%, of the height of the hopper.

The role of the cooling plate-like elements is to extract heat from the solid particles. Such heat exchange may be done with a variety of systems. For example, the cooling elements may be thermoelectric cooling plates, also called Peltier devices; alternatively, the cooling elements may comprise pipes for a cooling liquid. The solid particles in the hopper have a temperature greater than the cooling elements and transfer heat to the cooling elements upon physical contact. The cooling liquid is injected into the cooling elements and decrease the temperature of the plate by absorbing the heat given by the solid particles.

In one embodiment, the hopper comprises an inlet pipe and an outlet pipe for a cooling liquid and the plurality of cooling plate-like elements are fluidly connected to the inlet pipe and the outlet pipe. When the cooling plate-like elements are cooled by a cooling liquid, it may be an advantage to have an inlet pipe and an outlet pipe comprised in the hopper to supply all the cooling elements with cooling liquid. The inlet pipe may comprise an inlet for the cooling liquid and a fluid connection to each of the cooling elements, such that one inlet pipe is connected to the plurality of cooling elements, which cooling elements are connected to each other parallel. The inlet pipe could alternatively be connected to the plurality of cooling elements, which cooling elements may be connected to each other in series. The outlet pipe may, in a similar manner as indicated for the inlet pipe, be fluidly connected to each cooling elements and comprises one outlet for the cooling liquid to be drawn out of the hopper. Thus, the outlet pipe may comprise an outlet for the cooling liquid and a fluid connection to each of the cooling elements, such that one outlet pipe is connected to the plurality of cooling elements, which cooling elements are connected to each other parallel, or alternatively in series. This provides a simpler system with one inlet and one outlet for a cooling liquid. An alternative would be that each cooling elements has an inlet and an outlet for the cooling liquid which would have to be individually connected to the cooling liquid source or tank. This would result in the inlet pipe and outlet pipe being constructed of multiple inlet pipes and outlet pipes, each pair of inlet and outlet pipes being separately connected to one cooling element of the plurality of cooling elements.

In one embodiment, the inlet pipe and the outlet pipe are positioned parallel to each other, and at the same height in the buffer compartment.

In one embodiment, the inlet pipe and the outlet pipe are in the buffer compartment.

In one embodiment, at least one of the inlet pipe or the outlet pipe is located above the cooling plate-like elements, in a vertical direction of the hopper, i.e. the inlet pipe or outlet pipe is located closer to the top end of the hopper than the plurality of cooling plate-like elements, in particular both inlet and outlet pipes. This allows the operator to degas the assembly comprising the cooling plate-like elements, the inlet pipe and the outlet pipe, once the cooling elements have been filled with cooling liquid.

In one embodiment, the inlet pipe and the outlet pipe are located above the plurality of the cooling plate-like elements, in a vertical direction of the hopper, i.e. the inlet pipe and outlet pipe are located closer to the top end of the hopper than the plurality of cooling plate-like elements. This gives a better accessibility of the inlet and outlet pipes in case of maintenance. This configuration also makes the assembly of the cooling plate-like elements with the inlet pipe and the outlet pipe very easy to install and remove from the hopper, as the assembly can simply be lifted in and out of the buffer compartment. This configuration allows a conventional hopper, i.e. a hopper not comprising any cooling elements, to be easily transformed into a cooling hopper without any modification to other devices, for example conveyor belts arranged to deliver particles to the hopper. In this embodiment, the inlet pipe and outlet pipe create further obstacles to the particles, and they may cause further damages to the particles. However, this is not necessarily negative, in particular if the hopper is configured to feed particles into a crusher, or if the particles are to be melted or dissolved in a solution.

Furthermore, a hopper wherein the inlet and outlet pipes are in the buffer compartment, does not require additional space to accommodate the new elements. It does require some space for the inlet and outlet pipes to be connected to the cooling liquid circuit, but such connection is usually small and very flexible, so it can be introduced even in locations with limited space available.

The fact that the inlet pipe and the outlet pipe may be located above the plurality of the cooling plate-like elements requires that the liquid channels comprised in the cooling plate-like elements have a suitable pattern to ensure that the movement of the cooling liquid in the cooling elements is adequate.

In one embodiment, the plurality of cooling plate-like elements do not extend into a volume defined by the horizontal cross-section at 80% of the height of the hopper and the top end of the hopper. In terms of height in a vertical direction of the hopper, the cooling plate-like elements may be found in the hopper up to a height of 80 % of the height of the hopper calculated from the bottom end of the hopper. This means that most upper part of the hopper may not contain any parts of the plurality of the cooling plate-like elements, i.e. the part of the hopper provided by the upper 20% of the height from the top end and extending downwards in a vertical direction of the hopper, and the volume of the hopper's buffer compartment this provides. It may be preferable that the cooling elements are located towards the bottom of the hopper, in particular that they do not extend into a volume defined by the horizontal cross-section at 80% of the height of the hopper and the top end of the hopper. The plurality of cooling plate-like elements may thus be found in the section of the buffer compartment which in vertical extension extends up to a height of 80 % of the height of the hopper calculated from the bottom end of the hopper. The hopper may be adapted to during use be filled with solid particles to such an extent that the cooling plate-like elements are covered by particles in the hopper, i.e. the hopper is filled with solid particles up to a height from the bottom end which extends beyond the height of the plurality of cooling plate-like elements. This ensures that the cross-section of the hopper directly above the cooling elements can be completely filled with solid particles in operations, and ensures that the flow of solid particles between the cooling elements is equal or similar across the hopper.

In one embodiment, the area of the top end is 5 to 20 times, such as 5 to 17 times, 7 to 20 times, 7 to 17 times, 7 to 14 times, 5 to 14 times, larger than the area of the opening of the bottom end. A top end with an area much greater than the bottom end is typical of a hopper. This means that it can receives solid particles from a variety of devices without a precise dispensing mechanism such as a conveyor belt, and it can dispense solid particles in a very precise manner. This is different from a traditional heat exchanger which has a top end and a bottom end of similar sizes.
In one embodiment, the area of the top end is 9 to 11 times, in particular about 10 times larger than the area of the bottom end.

In one embodiment, the plurality of cooling plate-like elements are made of metal, such as stainless steel, carbon steel, wrought iron, aluminium bronze, copper brass, aluminium or copper, in particular stainless steel. Stainless steel is good heat conductor and can be resistant to corrosion. The exact choice of material may be done by the person skilled in the art based on the requirements of the system, for example the composition of the solid particles to be handled by the hopper.

In one embodiment, the hopper has a cooling capacity of 10 to 20 °C at a flow of 10 to 15 t/h (metric ton/hour).

In one embodiment, the hopper according to the present disclosure is comprised in an assembly comprising the hopper and a means for transporting solid particles to the hopper.

In one embodiment, the assembly comprising a hopper and a means for transporting solid particles may also comprise a screening device. The screening device ensures that the size of the particles being directed to the hopper do not exceed a specific size. This allows a better control on the characteristics of the stream of solid particles fed to the hopper and allows to design a more efficient hopper. One risk of installing cooling plate-like elements in the hopper is that the solid particles do not flow properly between the cooling elements. The screening device may be installed in the means for transporting solid particles to the hopper or between the means for transporting and the hopper.

If the means for transporting solid particles is a conveyor belt, the screening device may be found at the start of the conveyor belt or at any point on the belt, or at the end of the conveyor belt.

In one embodiment, the assembly comprises a screening device with a desired mesh size, and, in addition, the distance between two cooling plate-like elements in the buffer compartment, or the distance between a cooling plate-like element and a wall of the hopper is 4 to 8 times, in particular 4 to 6 times, more in particular 5 times, the mesh size of the screening device. This indicates that the distances between two cooling plate-like elements in the hopper, or the distance between a cooling plate-like element and a wall of the hopper are considerably larger than the mesh size of the screening device. When the assembly comprising a hopper according to the present disclosure also comprises a screening device, it was found that keeping a distance between two cooling plate-like elements in the hopper, or between a cooling plate-like element and a wall of the hopper provided a good cooling effect and did not affect the flow of particles within the buffer compartment.

In one embodiment, the hopper according to the present disclosure is comprised in a production system, in particular a system for the production of solid particles, in particular a system for the production of solid fertilizer particles. The system may comprise a granulator adapted to transform a melt into a solid particles, the present hopper, a crusher adapted to crush the solid particles fed to the crusher into solid particles with a smaller size, a first transporting means adapted to transport particles from the granulator to the hopper, preferably said particles being transported from the granulator are classified as oversized particles in view of predetermined particle size ranges, and a second transporting means adapted for transporting solid particles obtained from the crusher. The system may comprise a sequence of a granulator, such as a fluidized bed granulator, for transforming a melt into a solid particles, the hopper according to the present disclosure for feeding solid particles to a crusher for crushing the solid particles fed to the crusher into solid particles with a smaller size, a first means for transporting oversized particles from the granulator to the hopper and a second means for transporting solid particles from the crusher. When transforming a melt or a solution into solid particles in a granulator, it may be difficult to only obtain particles with a desired size or diameter. It is quite common to obtain a certain amount of oversized particles, i.e. particles with a diameter larger than the required size in addition to on-specs, or on-size, particles, i.e. particles which sizes are comprised in the desired, predetermined range, and undersized particles, i.e. particles with a diameter smaller than predetermined sizes considered as the on-spec or on-size particles. In order to reduce waste in the production process and increase the overall yield of the process, it is not desirable to simply discard the oversized particles. Instead, it is possible to crush the oversized particles to particles with a much smaller diameter and re-introduce these particles into the production process. For example, the crushed particles may be directly injected in the granulator as seed material or they may be melted or dissolved again, mixed with the melt or solution and directed to the granulator.
The on-specs particles may be directed to a storage area or a further processing step, such as coating. The undersized particles may be re-introduced in the granulator to be used as seed particles, they may also be mixed in a melt and directed to the granulator. In such a system, there is a means for transporting the oversized particles from the granulator to the hopper. Such a means for transporting may comprise a conveyor belt, a bucket elevator, a product chute or a pneumatic conveyor, for example. The end of the conveyor belt is located above the hopper and feeds oversized particles to the hopper. The hopper then cools down the particles and dispense them to the crusher, which is located below the hopper. The second means for transporting solid particles received the crushed particles from the crusher to the desired location in the plant. The second means for transporting may be one of more of a conveyor belt or an elevator. Fitting cooling elements in a hopper in such a system ensures that the overall space occupied by the system does not change, and the production process do not require any other transformation.

In one embodiment, the system comprising a granulator, the present hopper and a crusher and two means for transporting solid particles also comprises a screening device. The screening device ensures that the size of the particles being directed to the hopper do not exceed a specific size. This allows a better control on the characteristics of the stream of solid particles fed to the hopper and allows to design a more efficient hopper. One risk of installing cooling plate-like elements in the hopper is that the solid particles do not flow properly between the cooling elements.

In one embodiment, the system comprises a screening device with a desired mesh size, and, in addition, the distance between two cooling plate-like elements in the hopper, or the distance between a cooling plate-like element and a wall of the hopper is 4 to 8 times, in particular 4 to 6 times, more in particular 5 times, the mesh size of the screening device. When the system comprising a hopper according to the present disclosure also comprises a screening device, it was found that keeping a distance between two cooling plate-like elements in the hopper or between a cooling plate-like element and a wall of the hopper provided a good cooling effect and did not affect the flow of particles within the buffer compartment.

In another aspect, the present disclosure is related to a method for operating a hopper according to the present disclosure comprising the steps of: a) activating the cooling effect of the plurality of the cooling plate-like elements; b) providing solid particles to the top end of the hopper e.g. in a continuous or intermittent manner; and c) dispensing cooled solid particles via the opening of the bottom end of the hopper e.g. in a continuous or intermittent manner.

Activating the cooling effect of the plurality of the cooling plate-like elements also means turning on the process responsible for extracting heat from the cooling plate-like elements. This exact nature of the step may depend on the nature of the cooling elements. For example, if the cooling elements are thermoelectric plates, activating the plates will require providing electricity to the cooling elements. If the cooling elements are cooled via a cooling liquid, activating the cooling effect comprises the step of directing a cooling liquid to the cooling elements, maybe via the inlet pipe.

Once the cooling effect has been activated in the cooling elements, solid particles may be directed to the top end of the hopper. It may preferred to wait for the solid particles to reach a certain level within the buffer compartment of the hopper before beginning dispensing particles, e.g. defined as a preferred volume or height extending from the bottom end in a vertical direction of the hopper. For example, it may be preferred to wait so that the solid particles completely cover the cooling plate-like elements before dispensing them from the hopper. Said otherwise, it may be preferred to wait with dispensing particles from the hopper, until the hopper has been filled with particles to an extent so that the solid particles completely cover the cooling elements. Alternatively, the operator may wait until the solid particles have reached a certain level in the buffer compartment of the hopper, for example that 80%, or 90% or 95% of the volume of the buffer compartment is filled with solid particles, or the solid particles covering the plurality of cooling plate-like elements, or the solid particles reaching up in a vertical direction to a height of at least 80 % of the height of the hopper from the bottom end.

Once a desired level of particles in the hopper is reached, the opening of the bottom end may be opened to dispense the particles.

In another aspect, the present disclosure is related to a method for production of solid particles, in particular sized solid particles, using a hopper according to the present disclosure, said method comprising the steps of:
a) activating the cooling effect of the plurality of the cooling plate-like elements of said hopper;
b) providing solid particles to the top end of said hopper, e.g. in a continuous or intermittent manner; and
c) dispensing cooled solid particles via the opening of the bottom end of said hopper, e.g. in a continuous or intermittent manner,
d) dispensing the cooled solid particles from the hopper to a crusher to reduce the particle size of the solid particles, and
e) separating and directing any undersized solid particles obtained from the crusher to the granulator,
wherein said solid particles provided in b) are obtained by the steps of:
i) directing a melt to a granulator, in particular a melt comprising one or more selected from the group of urea, ammonium salt, nitrate salt, and/or mixtures thereof;
ii) granulating the melt in the granulator thereby obtaining particles, in particular in a fluidized bed granulator,
iii) separating the obtained particles based on predetermined size ranges into fractions of on-specs solid particles, undersized solid particles and oversized solid particles; and
iv) directing any oversized solid particles obtained to said hopper as said solid particles of step b.

The method of production of solid particles provides solid particles of a desirable predetermined size in an easier and more efficient manner compared to known methods of producing solid particles. Further, any undersized solid particles obtained from the separation in step iii) may be directed to the granulator, to be reused in the process.

In another aspect, the present disclosure is related to a method of operating a system according to the present disclosure comprising the steps of:
I) activating the cooling effect of the plurality of the cooling plate-like elements of said hopper;
II) directing a melt to a granulator, in particular a melt comprising one or more selected from the group of urea, ammonium salt, nitrate salt, and/or mixtures thereof;
III) granulating the melt in the granulator thereby obtaining particles, in particular in a fluidized bed granulator;
IV) separating the obtained particles based on predetermined size ranges into fractions of on-specs solid particles, undersized solid particles and oversized solid particles; and
V) directing any oversized solid particles obtained to said hopper;
VI) providing said any oversized solid particles to the top end of said hopper, e.g. in a continuous or intermittent manner; and
VII) dispensing cooled solid particles via the opening of the bottom end of said hopper, e.g. in a continuous or intermittent manner,
VIII) dispensing the cooled solid particles from the hopper to a crusher to reduce the particle size of the solid particles, and
IX) separating and directing any undersized solid particles obtained from the crusher to the granulator.

Said method of operating the system provides solid particles of a desirable predetermined size in an easier and more efficient manner compared to known methods of producing solid particles. Further, any undersized solid particles obtained from the separation in step IV) may be directed to the granulator, to be reused in the process.

In another aspect, the present disclosure is related to a method for producing solid particles in a granulator, in particular a fluidized bed granulator, using the hopper according to the present disclosure, comprising the steps of: a) directing a melt to a granulator, in particular a melt comprising one or more selected from the group of urea, ammonium salt, nitrate salt, and/or mixtures thereof; b) granulating the melt in the granulator thereby obtaining on-specs solid particles, undersized solid particles and oversized solid particles; c) activating the cooling effect of the plurality of the cooling-plate-like elements of the hopper according to the present disclosure; d) directing the oversized solid particles to a hopper according to the present disclosure; e) dispensing the cooled oversized solid particles from the hopper according to the present disclosure to a crusher, thereby obtaining undersized solid particles, and optionally also on-size solid particles; and f) directing the undersized solid particles obtained from the crusher in step e) to the granulator. Further, any undersized solid particles obtained from the granulation in step b) may be returned to the granulator, to be reused in the process.

In view of the methods disclosed above relating to operation of hopper or system, or production of solid particles, when transforming a melt or a solution into solid particles in a granulator, it may be difficult to only obtain particles with the desired size or diameter. In most cases, a granulator will produce on-size particles; undersized particles, i.e. particles with a diameter smaller than the required range; and oversized particles, i.e. particles with a diameter larger than the required range. A desirable particle size may be predetermined, and particles obtained from methods herein may be compared to said predetermined particle size. The production process may be optimized in different manners, for example to obtain the highest amount of on-size particles, or the least amount of oversized particles. In order to reduce waste in the production process and increase the overall yield of the process, it is not desirable to simply discard the oversized particles. Instead, it is possible to crush the oversized particles to particles with a much smaller diameter and re-introduce these particles into the production process. For example, the crushed particles may be directly injected in the granulator as seed material or they may be melted or dissolved again, mixed with the melt or solution and directed to the granulator. However, the particles obtained from the granulator are usually quite hot, for example above 80 °C, and it may not be desirable to crush particles with such a high temperature because of the risk of clogging the crusher. Using a hopper according to the present invention provides a very compact solution to the problem.

In the present system, method of operating the system, and method for production of solid particles, there is a means for transporting the oversized particles from the granulator to the hopper. Such a means for transporting may comprise a conveyor belt, a bucket elevator, a product chute or a pneumatic conveyor, for example. The end of the conveyor belt is located above the hopper and feeds oversized particles to the hopper. The hopper then cools down the particles and dispense them to the crusher, which is located below the hopper. A second means for transporting solid particles received the crushed particles from the crusher to the desired location in the plant. The second means for transporting may be one of more of a conveyor belt or an elevator. Fitting cooling elements in a hopper in such a system ensures that the overall space occupied by the system does not change, and the production process do not require any other transformation.

In one embodiment, the methods herein comprises provision of a cooling liquid to the cooling plate-like elements and wherein the relative humidity of the air in contact with the solid particles at a temperature equal to the temperature of the cooling liquid is lower than the critical relative humidity of the solid particles to be cooled.

In another aspect, the present disclosure is related to the use of a hopper according to the present disclosure for dispensing solid particles to a crusher.

In another aspect, the present disclosure is related to the use of a hopper according to the present disclosure in the manufacturing of (sized) solid fertilizer particles

In another aspect, the present disclosure provides a method for revamping, or transforming, a hopper comprising a buffer compartment defined by side walls, a top end comprising an opening adapted for receiving solid particles, and a bottom end comprising an opening adapted for dispensing the solid particles from the buffer compartment, the method comprising the steps of:
a) providing an assembly comprising a plurality of cooling plate-like elements fluidly connected to an inlet pipe for a cooling liquid and an outlet pipe for a cooling liquid, wherein the plurality of cooling plate-like elements are parallel with each other and the inlet pipe and the outlet pipe are located on the same side of the cooling plate-like elements;
b) placing the assembly provided in step a) in the buffer compartment of the hopper, such that the inlet pipe and outlet pipe are above the cooling plate-like elements; and
c) connecting the inlet pipe and the outlet pipe of the assembly to a cooling liquid circuit.

An advantage of the design of a hopper according to the present disclosure, is that a conventional hopper not comprising any cooling elements can be easily transformed or revamped into a hopper suitable for cooling solid particles.

An assembly of cooling plate-like elements with an inlet pipe for a cooling liquid and an outlet pipe for a cooling liquid can be produced elements by fluidly connecting to an inlet pipe for a cooling liquid and an outlet pipe for a cooling liquid. The plurality of cooling plate-like elements are parallel with each other and the inlet pipe and the outlet pipe are located on the same side of the cooling plate-like elements. The inlet pipe and outlet pipe should be connected on the side of the cooling elements that points upward once the assembly is installed in the hopper.

The assembly is then placed into the buffer compartment of the hopper without any major modification of the hopper. The hopper does not have to be removed from the production line. The revamping method just requires sufficient space above the hopper so that the assembly of cooling plate-like elements, inlet pipe and outlet pipe, can be inserted into the buffer compartment of the hopper from above the hopper.

This is highly interesting because it provides a simple and inexpensive solution to the problem of having granules with a high temperature being fed to a crusher. An alternative solution would be to replace the hopper with a heat exchanger for solid particles, but it would require much more work: removing the hopper, installing the new heat exchanger, and possibly modifying the devices feeding the particles to the new heat exchanger.

Minor modifications may have to be performed on the hopper, in particular to connect the inlet pipe and the outlet pipe to a cooling liquid circuit. The cooling liquid circuit is configured to deliver cooling liquid to the inlet pipe and remove the heated up cooling liquid from the outlet pipe.

Figure 1 represents an embodiment of a hopper according to the present disclosure viewed from one side. The hopper **1** comprises a top end **2,** a bottom end **3** a plurality, for example between 30 and 40, of cooling plates **4** placed vertically and parallel to each other. The cooling plates **4** are made of stainless steel SS316L and are connected to an inlet pipe **5** for a cooling liquid and an outlet pipe **6** for the cooling liquid. The sides of a cooling plate are essentially parallel to the corresponding side of the hopper to optimize the surface area of the cooling plate. The top end is about 3.8 m² and partially open to receive the particles. The bottom end is about 0.38 m² and is fully open, i.e. the opening on the bottom end is 0.38 m². The cooling liquid is process water available in the plant. The water has a temperature of 37 °C at the inlet pipe of the hopper. The height of the cooling plates **4** is 56% of the height of the hopper **1.**

The hopper from figure 1 is part of a granulation unit comprising a fluidized bed granulator, a conveyor belt for transporting the oversize granules produced in the granulator to the hopper, a crusher, wherein the opening of the bottom end of the hopper is located directly above the crusher, and a conveyor belt for transporting the crushed granules obtained from the crusher to an inlet of the granulator. A screen is placed between an outlet for the oversized granules of the granulator and the conveyor belt to transport the oversize granules to the hopper and has a mesh size of 10 mm. The distance between two cooling plates **4** in the hopper is about 50 mm. The granules, for example comprising urea, have a temperature of 60 to 75 °C when they arrive at the hopper, and a temperature of 40 to 45 °C when they are dispensed from the hopper to the crusher.

Figure 2 represents another view of the same embodiment as Figure 1, i.e. after a rotation of 90 ° around a vertical axis. The hopper comprises a plurality of cooling plates **4** essentially vertical and parallel to each other, and connected to the inlet pipe **5.** The outlet pipe **6** is located in the same horizontal plane as the inlet pipe **5.**

## Claims

1. A hopper comprising a buffer compartment defined by side walls, a top end comprising an opening adapted for receiving solid particles, and a bottom end comprising an opening adapted for dispensing the solid particles from the buffer compartment, wherein:
- the buffer compartment comprises a plurality of essentially vertically positioned cooling plate-like elements for cooling the solid particles in the buffer compartment;
- the hopper comprises an inlet pipe and an outlet pipe for a cooling liquid and the plurality of cooling plate-like elements are fluidly connected to the inlet pipe and the outlet pipe; and
- the inlet pipe and the outlet pipe are located in the buffer compartment above the plurality of cooling plate-like elements.

2. The hopper according to claim 1, wherein the height of the cooling plate-like elements is corresponding to between 30 and 80% of the height of the hopper, in particular the cooling plate-like elements are extending in a vertical direction from the bottom end of the hopper towards the top end.

3. The hopper according to claim 1 or 2, wherein the plurality of cooling plate-like elements do not extend into a volume defined by the horizontal cross-section at 80% of the height of the hopper and the top end of the hopper.

4. The hopper according to any one of claims 1 to 3, wherein the area of the top end is 5 to 20 times, in particular 7 to 15 times, larger than the area of the opening of the bottom end.

5. The hopper according to any one of claims 1 to 4, wherein the inlet pipe and the outlet pipe are parallel and at the same height in the buffer compartment.

6. The hopper according to any one of claims 1 to 5, wherein the plurality of cooling plate-like elements are made of stainless steel.

7. A system comprising a sequence of a granulator, in particular a fluidized bed granulator, a hopper, and a crusher, wherein the hopper is according to any one of claims 1 to 6 and configured to feed solid particles to the crusher, a first means for transporting particles, preferably oversized particles, from the granulator to the hopper, and a second means for transporting solid particles from the crusher.

8. The system according to claim 7 comprising a screening device for limiting the size of particles fed to the hopper.

9. A method for operating a hopper according to any one of claims 1 to 6 comprising the steps of:
a) activating the cooling effect of the plurality of the cooling plate-like elements;
b) providing solid particles to the top end of the hopper; and
c) dispensing cooled solid particles via the opening of the bottom end of the hopper.

10. The method according to claim 9, wherein step a) comprises providing a cooling liquid to the cooling plate-like elements and wherein the relative humidity of the air in contact with the solid particles at a temperature equal to the temperature of the cooling liquid is lower than the critical relative humidity of the solid particles to be cooled.

11. A method according to claim 9 or 10, for operating a hopper according to any one of claims 1 to 6, in a system for producing solid particles in a granulator, in particular a fluidized bed granulator, comprising the steps of:
a) directing a melt to a granulator, in particular a melt comprising one or more selected from the group of urea, ammonium salt, nitrate salt, and/or mixtures thereof;
b) granulating the melt in the granulator thereby obtaining on-specs solid particles, undersized solid particles and oversized solid particles;
c) activating the cooling effect of the plurality of the cooling plate-like elements;
d) directing the oversized solid particles to a hopper according to any one of claims 1 to 6; and
e) dispensing the cooled oversized solid particles from the hopper to a crusher, thereby obtaining undersized solid particles.

12. A method for production of solid particles, in particular sized solid particles, using a hopper according to any one of claims 1 to 6, said method comprising the steps of:
a) activating the cooling effect of the plurality of the cooling plate-like elements of said hopper;
b) providing solid particles to the top end of said hopper e.g. in a continuous or intermittent manner; and
c) dispensing cooled solid particles via the opening of the bottom end of said hopper e.g. in a continuous or intermittent manner,
d) dispensing the cooled solid particles from the hopper to a crusher to reduce the particle size of the solid particles, and
e) separating and directing any undersized solid particles obtained from the crusher to the granulator,
wherein said solid particles provided in b) are obtained by the steps of:
i) directing a melt to a granulator, in particular a melt comprising one or more selected from the group of urea, ammonium salt, nitrate salt, and/or mixtures thereof;
ii) granulating the melt in the granulator thereby obtaining particles, in particular in a fluidized bed granulator,
iii) separating the obtained particles based on predetermined size ranges into fractions of on-specs solid particles, undersized solid particles and oversized solid particles; and
iv) directing any oversized solid particles obtained to said hopper as said solid particles of step b.

13. A method for revamping a hopper comprising a buffer compartment defined by side walls, a top end comprising an opening adapted for receiving solid particles, and a bottom end comprising an opening adapted for dispensing the solid particles from the buffer compartment, the method comprising the steps of:
a) providing an assembly comprising a plurality of cooling plate-like elements fluidly connected to an inlet pipe for a cooling liquid and an outlet pipe for a cooling liquid, wherein the plurality of cooling plate-like elements are parallel with each other and the inlet pipe and the outlet pipe are located on the same side of the cooling plate-like elements;
b) placing the assembly provided in step a) in the buffer compartment of the hopper, such that the inlet pipe and outlet pipe are above the cooling plate-like elements; and
c) connecting the inlet pipe and the outlet pipe of the assembly to a cooling liquid circuit.

## Patentansprüche

1. Trichter, umfassend eine Pufferkammer, die definiert ist durch Seitenwände, ein oberes Ende, umfassend eine Öffnung, die für die Aufnahme fester Partikel eingerichtet ist, und ein unteres Ende, umfassend eine Öffnung, die zum Dosieren der festen Partikel aus der Pufferkammer eingerichtet ist, wobei:
- die Pufferkammer eine Vielzahl von im Wesentlichen vertikal positionierten kühlplattenartigen Elementen zur Kühlung der festen Partikel in der Pufferkammer umfasst;
- der Trichter ein Einlassrohr und ein Auslassrohr für eine Kühlflüssigkeit umfasst, und die Vielzahl von kühlplattenartigen Elementen fließtechnisch mit dem Einlassrohr und dem Auslassrohr verbunden ist; und
- das Einlassrohr und das Auslassrohr sich in der Pufferkammer über der Vielzahl von kühlplattenartigen Elementen befinden.

2. Trichter nach Anspruch 1, wobei die Höhe der kühlplattenartigen Elemente zwischen 30 und 80 % der Höhe des Trichters liegt, wobei sich insbesondere die kühlplattenartigen Elemente in vertikaler Richtung von dem unteren Ende des Trichters zu dem oberen Ende erstrecken

3. Trichter nach Anspruch 1 oder 2, wobei die Vielzahl von kühlplattenartigen Elementen sich nicht in ein Volumen erstreckt, das durch den horizontalen Querschnitt bei 80 % der Höhe des Trichters und das obere Ende des Trichters definiert ist.

4. Trichter nach einem der Ansprüche 1 bis 3, wobei die Fläche des oberen Endes 5 bis 20 Mal, insbesondere 7 bis 15 Mal, größer als die Fläche der Öffnung des unteren Endes ist.

5. Trichter nach einem der Ansprüche 1 bis 4, wobei das Einlassrohr und das Auslassrohr parallel und auf gleicher Höhe in der Pufferkammer sind.

6. Trichter nach einem der Ansprüche 1 bis 5, wobei die Vielzahl von kühlplattenartigen Elementen aus rostfreiem Stahl gefertigt ist.

7. System, umfassend eine Abfolge aus einem Granulator, insbesondere einem Wirbelschichtgranulator, einem Trichter und einem Brecher, wobei der Trichter nach einem der Ansprüche 1 bis 6 ist und ausgestaltet ist, um feste Partikel in den Brecher einzuspeisen, ein erstes Mittel zum Transportieren von Partikeln, vorzugsweise überdimensionierten Partikeln, von dem Granulator zu dem Trichter und ein zweites Mittel zum Transportieren fester Partikel von dem Brecher.

8. System nach Anspruch 7, umfassend eine Siebvorrichtung zur Begrenzung der Größe der Partikel, die in den Trichter eingespeist werden.

9. Verfahren zum Betreiben eines Trichters nach einem der Ansprüche 1 bis 6, umfassend die Schritte:
a) Aktivierung der Kühlwirkung der Vielzahl von kühlplattenartigen Elementen;
b) Bereitstellen von festen Partikeln an das obere Ende des Trichters; und
c) Dosieren gekühlter fester Partikel über die Öffnung am unteren Ende des Trichters.

10. Verfahren nach Anspruch 9, wobei Schritt a) Bereitstellen einer Kühlflüssigkeit an die kühlplattenartigen Elemente umfasst, und wobei die relative Feuchtigkeit der Luft in Kontakt mit den festen Partikeln bei einer Temperatur gleich der Temperatur der Kühlflüssigkeit niedriger ist als die kritische relative Feuchtigkeit der zu kühlenden festen Partikel.

11. Verfahren nach Anspruch 9 oder 10 zum Betreiben eines Trichters nach einem der Ansprüche 1 bis 6 in einem System zum Produzieren von festen Partikeln in einem Granulator, insbesondere einem Wirbelschichtgranulator, umfassend die Schritte:
a) Leiten einer Schmelze zu einem Granulator, insbesondere einer Schmelze, die ein oder mehrere ausgewählt aus der Gruppe von Harnstoff, Ammoniumsalz, Nitratsalz und/oder Mischungen davon umfasst;
b) Granulieren der Schmelze in dem Granulator, wodurch feste Partikel nach Spezifikation, unterdimensionierte feste Partikel und überdimensionierte feste Partikel erhalten werden;
c) Aktivieren der Kühlwirkung der Vielzahl von kühlplattenartigen Elementen;
d) Leiten der überdimensionierten festen Partikel zu einem Trichter nach einem der Ansprüche 1 bis 6; und
e) Dosieren der gekühlten überdimensionierten festen Partikel aus dem Trichter in einen Brecher, wodurch unterdimensionierte feste Partikel erhalten werden.

12. Verfahren zur Produktion von festen Partikeln, insbesondere von dimensionierten festen Partikeln, unter Verwendung eines Trichters nach einem der Ansprüche 1 bis 6, wobei das Verfahren die Schritte umfasst:
a) Aktivieren der Kühlwirkung der Vielzahl von kühlplattenartigen Elementen des Trichters;
b) Bereitstellen von festen Partikeln an das obere Ende des Trichters, z. B. in einer kontinuierlichen oder intermittierenden Weise; und
c) Dosieren gekühlter fester Partikel über die Öffnung des unteren Endes des Trichters, z. B. in einer kontinuierlichen oder intermittierenden Weise,
d) Dosieren der gekühlten festen Partikel aus dem Trichter zu einem Brecher, um die Partikelgröße der festen Partikel zu reduzieren, und
e) Trennen und Leiten jeglicher unterdimensionierten festen Partikel, die aus dem Brecher erhalten werden, in den Granulator;
wobei die in b) bereitgestellten festen Partikel durch die folgenden Schritte erhalten werden:
i) Leiten einer Schmelze zu einem Granulator, insbesondere einer Schmelze, die ein oder mehrere ausgewählt aus der Gruppe von Harnstoff, Ammoniumsalz, Nitratsalz und/oder Mischungen davon umfasst;
ii) Granulieren der Schmelze in dem Granulator, wodurch Partikel erhalten werden, insbesondere in einem Wirbelschichtgranulator;
iii) Trennen der erhaltenen Partikel basierend auf vorbestimmten Größenbereichen in Fraktionen aus festen Partikeln nach Spezifikation, unterdimensionierten festen Partikeln und überdimensionierten festen Partikeln; und
iv) Leiten jeglicher erhaltener überdimensionierter fester Partikel in den Trichter als feste Partikel aus Schritt b.

13. Verfahren zum Modernisieren eines Trichters, umfassend eine Pufferkammer, die definiert ist durch Seitenwände, ein oberes Ende, umfassend eine Öffnung, die für die Aufnahme fester Partikel eingerichtet ist, und ein unteres Ende, umfassend eine Öffnung, die zum Dosieren der festen Partikel aus der Pufferkammer eingerichtet ist, wobei das Verfahren die folgenden Schritte umfasst:
a) Bereitstellung einer Anordnung, umfassend eine Vielzahl von kühlplattenartigen Elementen, die fließtechnisch mit einem Einlassrohr für eine Kühlflüssigkeit und einem Auslassrohr für eine Kühlflüssigkeit verbunden sind, wobei die Vielzahl von kühlplattenartigen Elementen parallel zueinander ist, und das Einlassrohr und das Auslassrohr sich auf derselben Seite der kühlplattenartigen Elemente befinden;
b) Platzieren der in Schritt a) bereitgestellten Anordnung in der Pufferkammer des Trichters, so dass sich das Einlassrohr und das Auslassrohr über den kühlplattenartigen Elementen befinden; und
c) Verbinden des Einlassrohrs und des Auslassrohrs der Anordnung mit einem Kühlflüssigkeitskreislauf.

## Revendications

1. Trémie comprenant un compartiment tampon défini par des parois latérales, une extrémité supérieure comprenant une ouverture adaptée pour recevoir des particules solides, et une extrémité inférieure comprenant une ouverture adaptée pour distribuer les particules solides du compartiment tampon, dans laquelle :
- le compartiment tampon comprend une pluralité d'éléments en forme de plaques de refroidissement positionnés essentiellement verticalement pour refroidir les particules solides dans le compartiment tampon ;
- la trémie comprend un tuyau d'entrée et un tuyau de sortie pour un liquide de refroidissement et la pluralité d'éléments en forme de plaque de refroidissement sont reliés de manière fluidique au tuyau d'entrée et au tuyau de sortie ; et
- le tuyau d'entrée et le tuyau de sortie sont situés dans le compartiment tampon au-dessus de la pluralité d'éléments en forme de plaque de refroidissement.

2. Trémie selon la revendication 1, dans laquelle la hauteur des éléments en forme de plaque de refroidissement correspond à entre 30 et 80 % de la hauteur de la trémie, en particulier les éléments en forme de plaque de refroidissement s'étendent dans une direction verticale depuis l'extrémité inférieure de la trémie vers l'extrémité supérieure.

3. Trémie selon la revendication 1 ou 2, dans laquelle la pluralité d'éléments en forme de plaque de refroidissement ne s'étend pas dans un volume défini par la section transversale horizontale à 80 % de la hauteur de la trémie et de l'extrémité supérieure de la trémie.

4. Trémie selon l'une quelconque des revendications 1 à 3, dans laquelle la surface de l'extrémité supérieure est 5 à 20 fois, en particulier 7 à 15 fois, plus grande que la surface de l'ouverture de l'extrémité inférieure.

5. Trémie selon l'une quelconque des revendications 1 à 4, dans laquelle le tuyau d'entrée et le tuyau de sortie sont parallèles et à la même hauteur dans le compartiment tampon.

6. Trémie selon l'une quelconque des revendications 1 à 5, dans laquelle la pluralité d'éléments en forme de plaque de refroidissement sont réalisés en acier inoxydable.

7. Système comprenant une séquence d'un granulateur, en particulier d'un granulateur à lit fluidisé, d'une trémie et d'un broyeur, dans lequel la trémie est selon l'une quelconque des revendications 1 à 6 et configurée pour alimenter en particules solides le broyeur, un premier moyen pour transporter des particules, de préférence des particules surdimensionnées, du granulateur à la trémie, et un second moyen pour transporter des particules solides du broyeur.

8. Système selon la revendication 7, comprenant un dispositif de tamisage pour limiter la taille des particules alimentées dans la trémie.

9. Procédé pour l'exploitation d'une trémie selon l'une quelconque des revendications 1 à 6, comprenant les étapes de :
a) activation de l'effet de refroidissement de la pluralité des éléments en forme de plaque de refroidissement ;
b) fourniture de particules solides à l'extrémité supérieure de la trémie ; et
c) distribution de particules solides refroidies par l'ouverture de l'extrémité inférieure de la trémie.

10. Procédé selon la revendication 9, dans lequel l'étape a) comprend la fourniture d'un liquide de refroidissement aux éléments en forme de plaque de refroidissement et dans lequel l'humidité relative de l'air en contact avec les particules solides à une température égale à la température du liquide de refroidissement est inférieure à l'humidité relative critique des particules solides à refroidir.

11. Procédé selon la revendication 9 ou 10, pour l'exploitation d'une trémie selon l'une quelconque des revendications 1 à 6, dans un système de production de particules solides dans un granulateur, en particulier un granulateur à lit fluidisé, comprenant les étapes de :
a) direction d'une masse fondue vers un granulateur, en particulier une masse fondue comprenant un ou plusieurs composés choisis dans le groupe constitué par l'urée, un sel d'ammonium, un sel de nitrate et/ou leurs mélanges ;
b) granulation de la masse fondue dans le granulateur, permettant ainsi d'obtenir des particules solides selon les spécifications, des particules solides sous-dimensionnées et des particules solides surdimensionnées ;
c) activation de l'effet de refroidissement de la pluralité des éléments en forme de plaque de refroidissement ;
d) direction des particules solides surdimensionnées vers une trémie selon l'une quelconque des revendications 1 à 6 ; et
e) distribution des particules solides surdimensionnées refroidies de la trémie à un broyeur, obtenant ainsi des particules solides sous-dimensionnées.

12. Procédé de production de particules solides, en particulier de particules solides calibrées, en utilisant une trémie selon l'une quelconque des revendications 1 à 6, ledit procédé comprenant les étapes de :
a) activation de l'effet de refroidissement de la pluralité d'éléments en forme de plaques de refroidissement de ladite trémie ;
b) fourniture de particules solides à l'extrémité supérieure de ladite trémie, par exemple de manière continue ou intermittente ; et
c) distribution de particules solides refroidies par l'ouverture de l'extrémité inférieure de ladite trémie, par exemple de manière continue ou intermittente,
d) distribution des particules solides refroidies de la trémie à un broyeur pour réduire la taille des particules solides, et
e) séparation et direction de toutes particules solides sous-dimensionnées obtenues du broyeur vers le granulateur,
dans lequel lesdites particules solides fournies en b) sont obtenues par les étapes de :
i) direction d'une masse fondue vers un granulateur, en particulier une masse fondue comprenant un ou plusieurs composés choisis dans le groupe constitué par l'urée, un sel d'ammonium, un sel de nitrate et/ou leurs mélanges ;
ii) granulation de la masse fondue dans le granulateur, obtenant ainsi des particules, en particulier dans un granulateur à lit fluidisé,
iii) séparation des particules obtenues sur la base de plages de tailles prédéterminées en fractions de particules solides selon les spécifications, de particules solides sous-dimensionnées et de particules solides surdimensionnées ; et
iv) direction de toutes particules solides surdimensionnées obtenues vers ladite trémie en tant que dites particules solides de l'étape b.

13. Procédé de reconditionnement d'une trémie comprenant un compartiment tampon défini par des parois latérales, une extrémité supérieure comprenant une ouverture adaptée pour recevoir des particules solides, et une extrémité inférieure comprenant une ouverture adaptée pour distribuer les particules solides du compartiment tampon, le procédé comprenant les étapes de :
a) fourniture d'un ensemble comprenant une pluralité d'éléments en forme de plaque de refroidissement reliés de manière fluidique à un tuyau d'entrée pour un liquide de refroidissement et un tuyau de sortie pour un liquide de refroidissement, dans lequel la pluralité d'éléments en forme de plaque de refroidissement sont parallèles les uns aux autres et le tuyau d'entrée et le tuyau de sortie sont situés du même côté des éléments en forme de plaque de refroidissement ;
b) placement de l'ensemble fourni à l'étape a) dans le compartiment tampon de la trémie, de telle sorte que le tuyau d'entrée et le tuyau de sortie soient au-dessus des éléments en forme de plaque de refroidissement ; et
c) raccordement du tuyau d'entrée et du tuyau de sortie de l'ensemble à un circuit de liquide de refroidissement.
